# EUROPÄISCHE PATENTSCHRIFT

(11) **EP 2 277 098 B1**
(45) Veröffentlichungstag und Bekanntmachung des Hinweises auf die Patenterteilung: **01.10.2014**
(21) Anmeldenummer: 09723879.4
(22) Anmeldetag: 26.03.2009
(51) Int. Cl.: G06F 3/01

(54) **SYSTEM UND VERFAHREN ZUR MULTIDIMENSIONALEN GESTENAUWERTUNG**
SYSTEM AND METHOD FOR THE MULTIDIMENSIONAL EVALUATION OF GESTURES
SYSTÈME ET PROCÉDÉ D'ANALYSE MULTIDIMENSIONNELLE DE GESTES

(30) Priorität: 26.03.2008 DE 102008015730
(43) Veröffentlichungstag der Anmeldung: 26.01.2011
(73) Patentinhaber: Microchip Technology Germany II GmbH & Co. KG, 82205 Gilching (DE)
(72) Erfinder: RICHTER, Wolfgang, 82310 Starnberg (DE); AUBAUER, Roland, 82234 Wessling (DE)
(74) Vertreter: Grubert, Andreas
(86) Internationale Anmeldenummer: PCT/EP2009/002229
(87) Internationale Veröffentlichungsnummer: WO 2009/118183

(56) Entgegenhaltungen:
- US-A- 1 661 058
- US-A- 6 137 042

## Beschreibung

### Gebiet der Erfindung

Die Erfindung richtet sich auf ein System und ein Verfahren zur Generierung von Steuersignalen anhand von Gesten, insbesondere Hand- und/oder Fingergesten, die als solche von einem Anwender gegenüber einer Detektionseinrichtung ausgeführt werden.

### Hintergrund der Erfindung

Aus der auf die Anmelderin zurückgehenden internationalen Patentanmeldung PCT/EP2007/003555, veröffentlicht unter WO2007/121977, ist ein Steuersystem für ein Fahrzeug bekannt, das eine Elektrodenanordnung umfasst, über welche die räumliche Bewegung einer Hand des Fahrers oder Beifahrers erfasst werden kann, und nach Maßgabe dieser Bewegung Schalt- und Eingabeoperationen beispielsweise zur Bedienung eines Navigationsgerätes veranlasst werden können.

Aus der ebenfalls auf die Anmelderin zurückgehenden Patentanmeldung DE 10 2007 016 408.6 ist ein Mobiltelefon bekannt, das mit einer Sensoreinrichtung ausgestattet ist, über welche berührungslos Eingabeoperationen über einen Finger des Anwenders vorgenommen werden können.

Weiterhin ist aus der auf die Anmelderin zurückgehenden Patentanmeldung DE 10 2007 039 163.5 eine Computermaus bekannt, die es ermöglicht, Maus- und Menüsteuerungsfunktionen durch Hand-Gesten gegenüber der Computermaus vorzunehmen.

Aus der auf die Anmelderin zurückgehenden Patentanmeldung DE 10 2007 036 636.3 ist eine Puppe bekannt, die als solche mit mehreren Elektroden versehen ist, über welche eine Detektion der Gesten eines Spielkinds gegenüber der Puppe erfasst, und damit einhergehend eine Ansteuerung von Sprachwiedergabefunktionen der Puppe, sowie ggf. eine Ansteuerung mechatronischer Komponenten der Puppe abgewickelt werden kann. Durch diese Technik wird es möglich einen besonders realitätsnahen und nicht monoton erscheinenden Dialog mit dem Spielzeug abzuwickeln.

Bei den vorgenannten Systemen erfolgt die Erfassung der räumlichen Bewegung einer Hand gegenüber dem Detektionssystem auf Grundlage feldelektrischer Wechselwirkungseffekte. Das Detektionssystem ist hierzu mit Elektroden ausgestattet, die als solche in LC-Netzwerke eingebunden sind und Signale liefern, de Aufschluss über den Abstand der Hand zu der Elektrode geben. Anhand dieser Signale kann der Bahnverlauf einer Geste errechnet werden. Aus dem errechneten Bahnverlauf wiederum können Gesten ermittelt werden.

Die Errechnung von Abstands- und Bahninformationen kann über eine elektronische Schaltung bewerkstelligt werden, auf welcher in einem elektronischen Speicher charakteristische Gestenbahnen hinterlegt sind.

Aus der US Patentschrift US 1,661,058 ist ein Verfahren und eine Vorrichtung zur Generierung von Klängen bekannt. Aus der US 6,137,042 ist eine Anzeigevorrichtung für Musik bekannt, welche mit einer derartigen Vorrichtung erzeugt wurde.

### Aufgabe der Erfindung

Der Erfindung liegt die Aufgabe zugrunde, Lösungen zu schaffen, durch welche es möglich wird, eine zuverlässige Erfassung und Interpretation von Gesten mit einem möglichst geringen Hardwareaufwand zu bewerkstelligen und ein breites Spektrum von Eingabegesten zuverlässig zu verarbeiten.

### Erfindungsgemäße Lösung

Diese Aufgabe wird gemäß dem unabhängigen Anspruch 1 gelöst. Die abhängigen Ansprüche kennzeichnen weitere Ausgestaltungen. Gemäß verschiedener Ausführungsformen kann ein Verfahren und System zur Abwicklung einer Signalverarbeitung von Eingangssignalen bereitgestellt werden, die als solche durch Hand-Gesten generiert werden, die seitens eines Anwenders gegenüber einem Detektionssystem vollführt werden.

Dadurch wird es auf vorteilhafte Weise möglich, unter Rückgriffnahme auf bewährte und für den Bereich der Spracherkennung entwickelte Schaltungs- und Auswertungssysteme auch eine Gestenerkennung und Auswertung vorzunehmen. Es sind hierbei Anwendungen möglich, bei welchen die für Spracherkennung entwickelten Konzepte und Chipsätze ausschließlich zur Gesteninterpretation verwendet werden. Weiterhin ist es möglich, Spracherkennungssysteme zusätzlich mit der Funktion der Gestenerkennung auszustatten, wobei der Mikrophoneingang auch unmittelbar als Eingang für die Gestensignale fungieren kann. Das erfindungsgemäße Konzept der Umwandlung von Gestenbahnverläufen in klangartige Sequenzen kann bei verbreiteten Rechnersystemen und anderen Systemen, in denen Spracherkennung implementiert werden kann, insbesondere Mikrocontrollern, unter relativ geringem Aufwand an Zusatzhardware realisiert werden. Die erfindungsgemäß generierten klangartigen Sequenzen können so generiert werden, dass diese bei entsprechenden Systemen, ggf. in Überlagerung mit Mikrofonsignalen mit einem Zwischenstecker in den akustischen Eingang des Systems eingekoppelt werden. Durch dieses Konzept wird es möglich, Spracherkennungsprogramme auf besonders vorteilhafte Weise um Gesteninterpretationsfunktionen zu erweitern. Die zur Gestenaufzeichnung, bzw. zur Erfassung der räumlichen Bewegung der Gestenhand, oder ggf. auch lediglich von Fingern, vorgesehenen Erfassungselektroden können insbesondere in ein Headset, eine Tatstatur, ein Mousepad, eine Computermaus, oder auch einen Bildschirmrahmen eingebunden sein. Die Erfassungselektroden können auch in andere Strukturen eingebunden sein, die sich als typischer Bezugspunkt für eine Gestenerfassung eignen. Im Fahrzeugbereich eignen sich hierbei insbesondere Strukturen im Bereich des Armaturenbretts, des Lenkrads, der Mittelkonsole und der Türverkleidungen.

Die erfindungsgemäße Sensoreinrichtung kann auch so gestaltet sein, dass durch diese überwiegend statische Gesten, z.B. statische Handformen erfasst und in hierfür hinreichend eindeutige Klangsequenzen konvertiert werden können. Derartige statische Gesten können beispielsweise als "flache Hand", "Faust mit ausgestrecktem Daumen", "Victory Zeichen" ausgeführt werden. Bei diesen statischen Gesten kann an hand der während der statischen Phase generierten Sensorsignale eine bestimmte Klangsequenz generiert werden. Es ist auch möglich, den für den Aufbau und den Abbau der statischen Gesten typischen Bewegungsvorgang klanglich abzubilden und bei der Erkennung dieser Gesten zu berücksichtigen.

Über die Konvertierung der mit der Geste korrelierenden Bahnverlaufssignale in klangartige Signalsequenzen wird auch eine Übermittlung der Gesteninformationen über Telekommunikationssysteme und VOIP-Systeme innerhalb des Klangdatenfrequenzbereiches ermöglicht. Die Gesteninformationen können damit unter Nutzung von Sprachübertragungssystemen auch an einem vom Operator, d.h. dem gestikulierenden Anwender, entfernten Ort zur Verfügung gestellt werden. Durch das erfindungsgemäße Konzept kann auch eine Konversion einer Handgestensprache in eine klangbehaftete Sprache erfolgen.

Erkennungsmuster für die einzelnen Gesten können durch Teachverfahren, oder auch zu bestimmten Bahnverläufen errechnet und zur Auswertung hinterlegt werden. Erfindungsgemäß werden Gesten, die von Lebewesen stammen (vorzugsweise Menschen) mit Hilfe eines Detektors erfasst und in Tonfolgen (Klang-Sequenzen) konvertiert. Diese können dann mit aktuellen Methoden der Sprach- oder Tonfolgenverarbeitung analysiert und ausgewertet werden. Verbal gesprochene Kommandos können ggf. parallel hierzu über den gleichen Kanal in dieselbe Verarbeitung gelangen und lassen sich mit den Gesten zusammen, einzeln oder nacheinander auswerten.

Vorzugsweise werden die von der Gestenerkennungsschaltung generierten Tonsequenzen im gleichen Frequenzband wie die Spracheingabe erzeugt, sodass auch die in der Sprachverarbeitung vorhandenen Filtermethoden benutzt werden können. Es ist jedoch auch möglich, einen anderen, beispielsweise zum Randbereich des verarbeiteten Frequenzbereichs hin versetzten Frequenzbereich zu wählen. Ähnlich oder genauso wie Sprachkommandos lassen sich dann Gesten in das System eintrainieren und bei deren Wiederkehr in Funktionen ausführen, die z.B. in einer Tabelle gespeichert wurden. So lässt sich bis auf den Gestentonfolgewandler dieselbe Hard- und Software benutzen wie bei der Sprachverarbeitung, was gegenüber getrennt arbeitenden Systemen einen ökonomischen und schaltungstechnischen Vorteil bedeutet. Die betreffenden Gesten können dabei vor einer Erfassungseinrichtung dreidimensional in einem bestimmten Zeitintervall durchgeführt werden und sind weitgehend bedienerunabhängig.

Grundsätzlich eignet sich das erfindungsgemäße Konzept für verschiedenste Techniken der Gestenerfassung, wie optische, kapazitive oder bildverarbeitende Techniken. Es ist vorteilhaft, wenn die Ermittlung der Gesten in Sequenzen erfolgt und für jede Sequenz ein bestimmter Ton erzeugt werden kann.

Somit erzeugt eine einfache oder komplexe Geste eine mehr oder weniger andauernde unterschiedliche Tonfolge. Da nie jemand die gleiche Geste zweimal exakt genau eingeben kann, weist das System vorzugsweise eine tolerante Erkennung auf. Dies geschieht vorzugsweise programmbasiert. Eine hierfür geeignete Software kann erfindungsgemäß unter Nutzung der in Sprachverarbeitungssystemen vorgesehenen Erkennungs- und Interpretationsprozeduren bereitgestellt werden, insbesondere wenn die erfindungsgemäß mit der Geste, insbesondere der Gestenbahn, korrelierende Tonfolge eine ähnliche Ausprägung hat wie ein gesprochenes Wort oder ein Satz.

### Aufnahme der Gestensignale

Die Aufnahme der Gestensignale erfolgt vorzugsweise mithilfe eines oder mehrerer kapazitiver (E-Feld) Sensoren. Diese Sensoren sind vorzugsweise so aufgebaut, dass diese Veränderungen in einem künstlich erzeugten elektrischen Feld detektieren und hiermit einhergehend Signale liefern, de mit der Position oder Bewegung der Hand oder eines Fingers hinreichend eng korrelieren. Vorzugsweise erfolgt eine Vorverarbeitung der Gestensignale. Diese Vorverarbeitung kann in vorteilhafter Weise auf eine bereits erkannte Geste abgestimmt sein. Die Gestenerfassung kann unter Aufsplitten/Demultiplexen des vom jeweiligen Sensor gelieferten Signals bzw. bei der bevorzugten Verwendung mehrerer Sensoren - der Signale erfolgen.

Die Interpretation der Gesten erfolgt vorzugsweise indem Sensorsignale für mindestens zwei, vorzugsweise drei Raumkoordinaten generiert werden. Diese Sensorsignale werden vorzugsweise in einem mehrkanaligen Messsystem gewonnen, wobei die Sensorsignale mehrkanalig parallel oder im Zeitmultiplex erfasst werden können. Ebenfalls möglich ist eine Anregung des Systems im Zeitmultiplex oder auch Frequenzmultiplex.

Die Umsetzung der trägermodulierten (Elektrodenempfangs) Signale der verschiedenen Sensor-Kanäle kann insbesondere durch Hüllkurvendetektion bzw. Gleichrichtung und Tiefpassfilterung (Bewegungsfrequenz < Tiefpassfrequenz < Trägerfrequenz) in niederfrequente Empfangssignale erfolgen, deren Amplitude proportional zur Annäherung/Entfernung vom Empfangssensor ist. Es ist möglich, einen Gestenanfang und ein Gestenende folgendermassen zu erkennen:
a. Annäherungsdetektion: Als Gesten werden die Signale der E-Feld Sensoren erkannt, bei welchen mindestens ein Sensorsignal einen bestimmten bzw. einen sich adaptiv einstellenden Pegel überschreitet oder unterschreitet.
b. Bewegungsdetektion: Als Gesten werden Signale der E-Feldsensoren mit einer Mindestveränderungsgeschwindigkeit erkannt. Hierzu ist es vorteilhaft die mathematische Ableitung dieser Signale zu bilden. Alternativ ist es auch möglich eine Hochpassfilterung, die der Ableitung entspricht, durchzuführen.
c. Die vorgenannten Maßnahmen nach a. und b können auch in Kombination durchgeführt werden.

Gemäß einer besonders bevorzugten Ausführungsform der Erfindung erfolgt eine Normierung der Gestensignale z. B. durch die Subtraktion des zeitlichen Mittelwerts bzw. des Gleichsignalanteils aller Sensorsignale von den jeweiligen einzelnen Sensorsignalen.

Weiterhin ist es möglich, Koordinatentransformation der detektierten Sensorsignale vorzunehmen, so dass die korrespondierenden Gesten in einer räumlichen Referenzebene abgebildet werden.

Diese Referenzgestenebene liegt vorzugsweise im wesentlichen parallel zu den Elektrodenflächen und senkrecht zur Sensorachse, so dass die korrespondierenden Gesten immer in einem bestimmten Abstand zum Sensorursprung abgebildet werden. Der Schwerpunkt der durch die Geste aufgespannten Fläche liegt vorteilhaft auf der Sensorachse.

Die Umsetzung der so transformierten mehrdimensionalen Sensorsignale erfolgt vorzugsweise durch eine Spannungs-Frequenzumsetzung (z.B. VCO) in geeignete Tonfolgen, die im Sprachfrequenzbereich von typischerweise 50Hz - 8000Hz bzw. 300-3400Hz (Telefonbandbereich) liegen, so dass die verschiedenen (typischerweise 3) Sensorsignale in ein einziges auszuwertendes Gestensignal (1 Kanal) überführt werden. Dieses wird dem Gestenerkenner im nächsten Schritt zur Auswertung zur Verfügung gestellt.

Die Sensorsignale können als Zeitmultiplex-Signale generiert werden. Die Umwandlung oder Transformation der Sensorsignale mittels VCO Wandlung führt vorzugsweise zu Signalen in jeweils unterschiedlichen Frequenzbändern im Sprachfrequenzbereich.

### Gestenerkennung

Die Erkennung der Gesten erfolgt vorzugsweise unter Verwendung eines DTW (Dynamic Time Warping) Mustererkenners zur Erkennung gesamter Gesten, analog zur Worterkennung bei Spracherkennern. Diese Erkennertypen zeichnen sich durch eine für zahlreiche Anwendungsfälle ausreichende Trennschärfe gegenüber ähnlich ausgeführter Gesten und damit eine bei einem kleineren Gestenspektrum mit relativ markanten Gesten ausreichende Erkennungsrate aus.

Alternativ zu dem vorgenannten Ansatz der DTW-Mustererkennung ist es auch möglich ein ebenfalls als Spracherkennungskonzept bekanntes Verfahren des Hidden Markov Modell (HMM) Erkenners zu verwenden. Bei dieser Art der Spracherkennung werden Wörter in Phoneme, atomare quasistationäre Laute der Sprache zerlegt. Analog werden Gesten in Gestenfragmente zerlegt, die im HMM durch Zustände repräsentiert werden. Als Gestenfragmente können beliebige Teile einer Geste verwendet werden, also beliebige Gesten vorzugsweise Finger/Hand/Arm . Insbesondere geradlinige oder gekrümmte Bewegungen, Veränderungen der Orientierung (z.B. Drehung der Hand), Veränderungen der Form (wie Öffnen der Hand), sowie jeweils beliebig weit abgeleitete und integrierte Formen dieser Änderungen (Bewegungslängen, -geschwindigkeiten, etc.). Diese Gestenfragmente werden einzeln hintereinander erkannt und von dem HMM Erkenner wieder den definierten (in einem Trainings oder Beschreibungsprozess) Gesamtgesten zugeordnet (für dieses Beispiel: L Geste).

Die erfindungsgemäß als klangartige Signalsequenzen generierte und mit der Handgeste korrelierende Signale können weiterhin auch durch einen Neuronalen Netzwerkerkenner und Gestenfragment Klassifizierer, analog zur Spracherkennung (Phonem Classifier), ausgewertet werden.

Die vorgenannten Maßnahmen, sowie anderweitige verbreitete Spracherkennungsverfahren können auch in Kombination ausgeführt werden, um aus den erfindungsgemäß als klangartige Signalsequenzen generierten Gestensignale auszuwerten und dabei zu interpretieren.

### Unterscheidung von Trainings- und Erkennungsphase

Die zu erkennenden Gesten werden vorzugsweise mindestens einfach, ggf. auch mehrfach trainiert und im Gestenerkenner als Referenzmuster abgelegt. Gesten gleicher Aussage, die jedoch beim Training als zu unterschiedlich erkannt werden, werden vorzugsweise abgewiesen. Nicht abgewiesene, hinreichend ähnliche und damit eindeutige Gesten können durch Mittelwertbildung der entsprechenden Referenzsignale zusammengefasst werden.

Alternativ zum Trainingsprozess kann auch eine grafische - z.B. Maus/Menübasierte - Eingabe von Referenzgesten (Pfeil von rechts nach links, oben nach unten, Kreis, usw) erfolgen. Zu diesen eingegebenen Gesten können die entsprechend erwarteten Sensorsignale ermittelt und im Gestenerkenner als Referenzmuster hinterlegt werden.

### Erkennungsphase

Während der Erkennungsphase werden vorzugsweise die Gestensignale mit den im Trainings/Beschreibungsprozess abgelegten Referenzsignalmuster verglichen und die wahrscheinlichste Geste ausgegeben. Falls die Gestensignale zu weit von allen Referenzsignalen abweicht wird ein "nicht erkannt" ausgegeben. Hier kann in Abhängigkeit der Abweichung ein Schwellwert definiert werden, mit dem die Wahrscheinlichkeit für Fehldetektionen (die erkannte Geste wird falsch zugeordnet) und irrtümliche Abweisung (im Englischen "Miss" d.h. eine Geste wird nicht erkannt und abgelehnt) je nach Applikation angepasst werden können. Bei einem HMM Erkenner erfolgt die Suche nach der besten Geste vorteilhaft durch einen Viterbi-Algorithmus.

Durch das erfindungsgemäße Konzept wird es möglich, Gestensignale einem Spracherkennungssystem zuzuführen und auf überraschend wirkungsvolle Weise durch die bereits für die Spracherkennung entwickelten Erkennungsverfahren auszuwerten. Die Sensorik unter Verwendung niederfrequenter elektrischer Felder (E-Feldsensorik) im Bereich bis ca. 100 kHz ermöglicht eine sichere Erkennung von Bewegungen im Abstand von typischerweise bis zu 50cm von den entsprechenden Detektionselektroden.

Für eine räumliche Abbildung der Geste werden vorzugsweise wenigstens drei Elektroden verwendet, die beispielsweise drei jeweils mit der Dynamik der Abstandsänderung korrelierende Tonbeiträge liefern. Um insbesondere auch die Form der Hand zu erkennen, und insgesamt die Auflösung zu erhöhen und ggf. eine gewisse Redundanz zu schaffen ist es vorteilhaft, mehr als drei Elektroden zu verwenden und damit ein bzgl. der Koordinaten ggf. überbestimmtes System zu schaffen.

### Kurze Beschreibung der Zeichnungen

Weitere Einzelheiten und Merkmale der Erfindung ergeben sich aus der nachfolgenden Beschreibung in Verbindung mit der Zeichnung. Es zeigt:
**Figur 1** eine Schemadarstellung zur Veranschaulichung des erfindungsgemäßen Gestenerkennungskonzeptes bei welchem die räumliche Bewegung einer Hand durch drei Sendeelektroden und eine Empfangselektrode erfasst wird und das über die Empfangselektrode erfasste Signal derart generiert oder modifiziert wird, dass dieses über ein Spracherkennungssystem hinreichend eindeutig erkannt werden kann;
**Figur 2** eine weitere Schemadarstellung zur Veranschaulichung des erfindungsgemäßen Gestenerkennungskonzeptes;

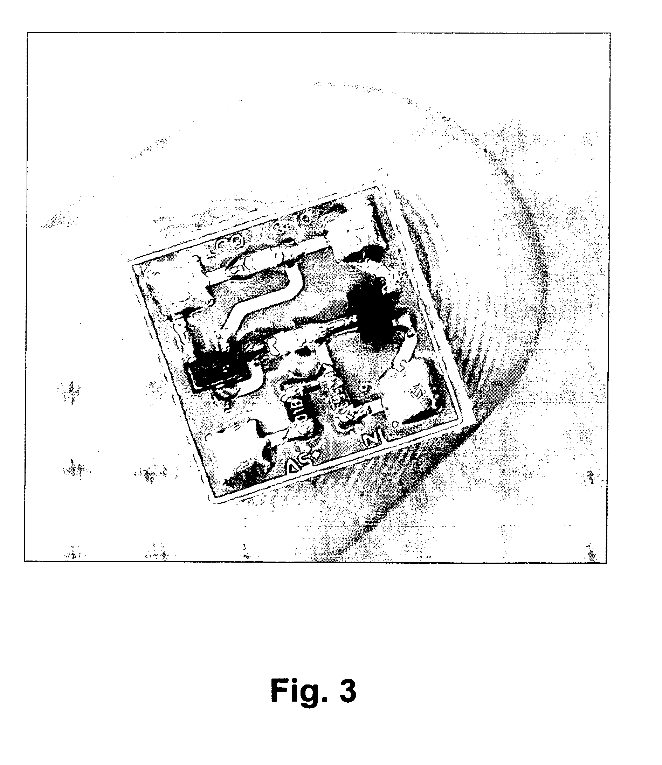

**Figur 3** eine photographische Darstellung zur Veranschaulichung einer erfindungsgemäßen Erfassungsschaltung durch welche in Korrelation mit einer gegenüber einer Elektrodenanordnung vorgenommenen Geste klangartige Signale generiert werden können.

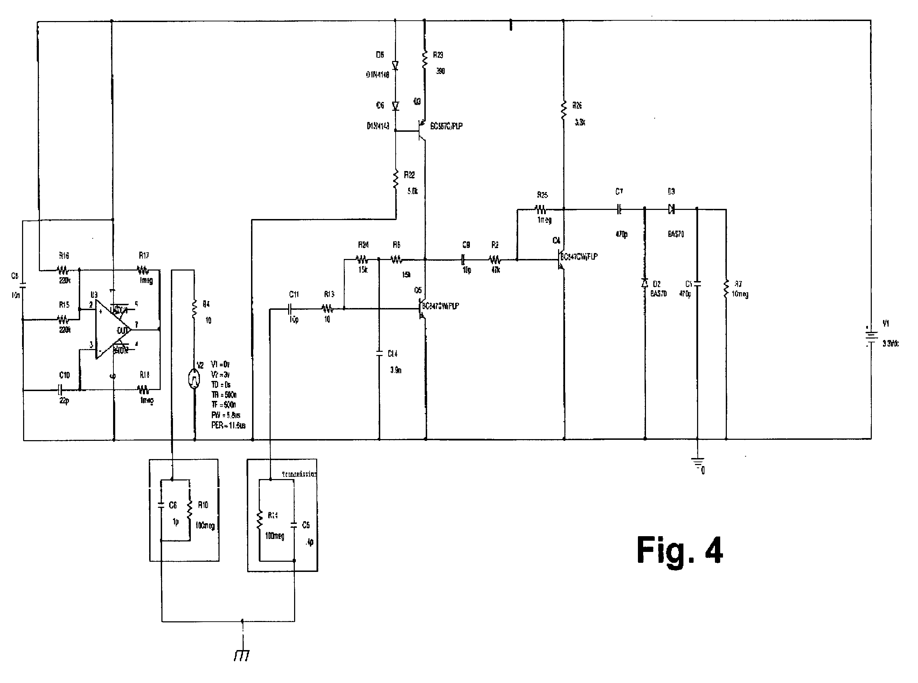

**Figur 4** einen Schaltplan zur Veranschaulichung des Aufbaus der Erfassungsschaltung nach Figur 3;
**Figur 5** ein Blockdiagramm zur Veranschaulichung der Hinterlegung von zu erkennenden Gesten durch grafische Eingaben;
**Figur 6** ein Blockdiagramm zur Veranschaulichung eines Beispielsystems mit mehreren Sendern und einem Empfänger im Lernmodus;
**Figur 7** ein Blockdiagramm zur Veranschaulichung eines Beispielsystems mit mehreren Empfängern und einem Sender im Lernmodus;
**Figur 8** ein Blockdiagramm zur Veranschaulichung eines weiteren Beispielsystems mit mehreren Sendern und einem Empfänger im Erkennungsmodus;
**Figur 9** ein Blockdiagramm zur Veranschaulichung eines weiteren Beispielsystems mit einem Sender und mehreren Empfängern im Erkennungsmodus;
**Figur 10** eine Skizze zur Veranschaulichung eines Computersystems mit einer Gestenerkennungseinrichtung bei welchem die Einkopplung der Gestensignale in einen Mikrophoneingang erfolgt und die Gestenerkennung über ein Spracherkennungsprogramm mit erweitertem Vokabular bewerkstelligt wird;

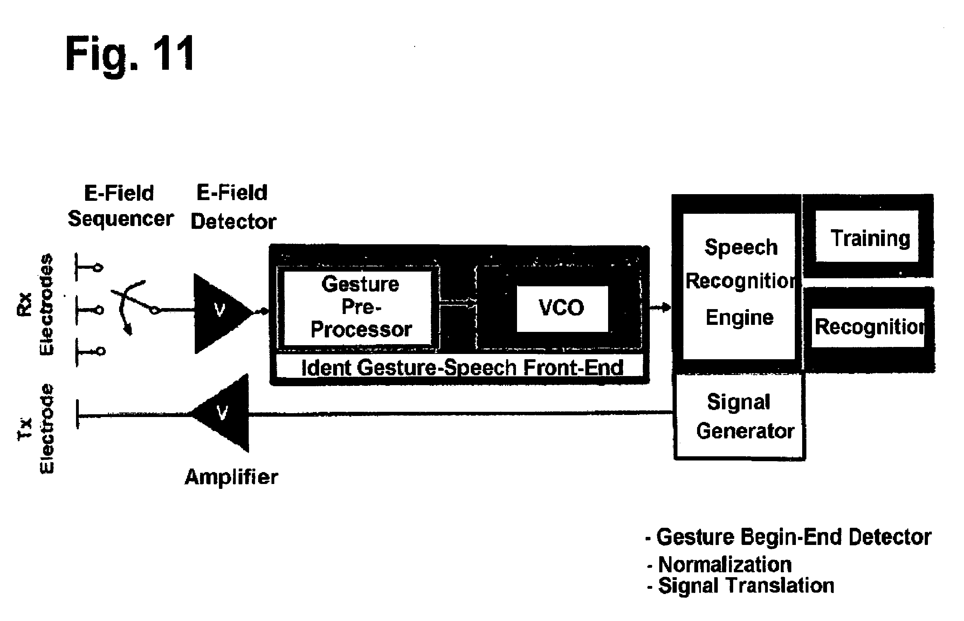

**Figur 11** eine Schemadarstellung zur Veranschaulichung weiterer Einzelheiten des erfindungsgemäßen Konzepts der Generierung klangartiger und mit der Gestenkontur und der Gestendynamik korrelierender Signale die durch ein Spracherkennungssystem mit leicht erweitertem Vokabular identifiziert werden.

### Ausführliche Beschreibung der Zeichnungen

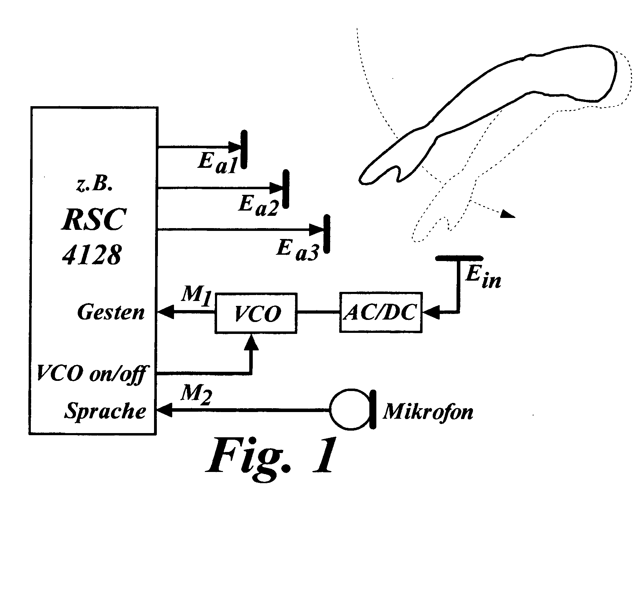

Figur 1 veranschaulicht eine erste Variante einer erfindungsgemäßem Schaltung. Ein elektronisches Bauelement, welches für Sprachverarbeitung grundsätzlich geeignet und ausgestattet ist (z. B. der Baustein RSC 4128) beinhaltet einen programmierbaren Controller. Dieser wird per Firmware angewiesen, an mindestens einem IO Port ein wechselndes Signal zu erzeugen (1-0 Folge). Dieses Signal kann entweder optisch, z.B. durch Leuchtdioden, oder auch kapazitiv, z.B. auf eine Koppelfläche, ausgegeben werden. Im letzteren Fall erzeugt es ein elektrisches Wechselfeld. Ein vorzugsweise mit einem Transimpedanzverstärker ausgestatteter Detektor kann dieses Feld oder eine von der Leuchtdiode stammende Lichtmenge empfangen. Diese wird in eine Gleichspannung gewandelt, die einen spannungsgesteuerten Oszillator VCO betreibt. Eine Änderung der Lichtstärke oder des elektrischen Feldes, z.B. durch das Einbringen menschlicher Gliedmaßen in den Erfassungsbereich, ändert die Tonhöhe. Diese kann absinken oder ansteigen. Wird der entsprechende Controllerpin nur kurzzeitig aktiviert (z.B. 40 Millisekunden), so wird auch die Tonänderung nur in dieser Zeit stattfinden. Letztlich kann der betreffende VCO über einen anderen IO Pin ein- oder ausgeschaltet werden, so dass im Leerlauf kein Ton hörbar ist. Die durch Annäherung erzeugte Tonfolge wird der eigentlich für die Sprachverarbeitung vorgesehenen Analyseschaltung, die typischerweise aus einer Kombination von Hard- und Software besteht, zugeführt und zwar vorzugsweise im gleichen Chip, der auch das Feld-oder Lichtsignal generiert. Will man mehrere Dimensionen erfassen, so werden erforderlichenfalls mehrere feldgebende Elektroden oder Leuchtdioden vorgesehen. Dies kann mit Hilfe anderer IO Pins desselben Controllers geschehen, die nacheinander (= Sequenz) aktiviert werden können.

Die Signalverarbeitung und Auswertung erfolgt erfindungsgemäß durch an sich verbreitete Analysetechniken zur Sprachverarbeitung. Diese Spracherkennungstechniken werden erfindungsgemäß zur Gestenerkennung genutzt, indem zunächst in Korrelation mit den Gesten klangartige, sprachähnliche Signalsequenzen gebildet werden. Die Auswertung dieser klangartigen Signalsequenzen ist vergleichsweise zuverlässig, da die Töne so generiert werden können, dass diese beispielsweise eher wie eine Folge von Vokalen erscheinen und Konsonanten und Zischlaute fehlen können (aber nicht müssen). Damit ist es auch möglich, sprachliche Kommandos und Gestenkommandos miteinander zu mischen und gleichzeitig oder nacheinander auszuführen. Mit Hilfe neuronaler Netze oder anderer lernenden Algorithmen ist es möglich, ein derartiges System zu trainieren und Toleranzschwellen einzustellen.

Bei dem in Figur 1 dargestellten elektronischen Baustein sind an dessen IO Ports beispielsweise drei feldabgebende Elektroden (z.B. Kupferflächen) angekoppelt. In ihrer Nähe befindet sich eine feldaufnehmende Elektrode E-in. Diese ist an einem Buffer (z.B. Transimpedanzverstärker) , einer nachfolgenden Gleichrichterschaltung, bestehend aus Diode und Kondensator und einem spannungsgesteuerten Oszillator ( VCO, hier ein Nadelimpulsgenerator) dargestellt. Mit Hilfe dieser Schaltung ist es möglich, Tonfolgen (Tonsequenzen) zu generieren, die durch Annähern, vorzugsweise menschlicher Gliedmaßen, in ihrer Höhe verändert werden. Mit Hilfe einer Sequenzerschaltung (Software oder Hardware) werden nun die einzelnen Elektrodenflächen E1 bis E3 nacheinander aktiviert und zwar mit einem Wechselfeld aus 1-0 Folgen zeitlicher Länge, z.B. 100 kHz für jeweils 20 Millisekunden. Es entstehen elektrische Wechselfelder. Das Einbringen von Gliedmaßen kann das Feld zur Eingangselektrodenfläche Ke abschwächen oder als Überbrückung wirken. Beide Effekte verändern die Tonhöhe des angeschalteten VCO. Dessen Ausgang ist in den Chip zurückgeführt, wo die Sprachverarbeitung integriert ist. Somit lässt sich eine Bewegungsfolge einfach eintrainieren und auswerten. An denselben (oder einen anderen Eingang) kann auch ein Mikrophon angeschaltet werden, welches sprachliche Kommandos auf gleiche Weise verarbeitet.

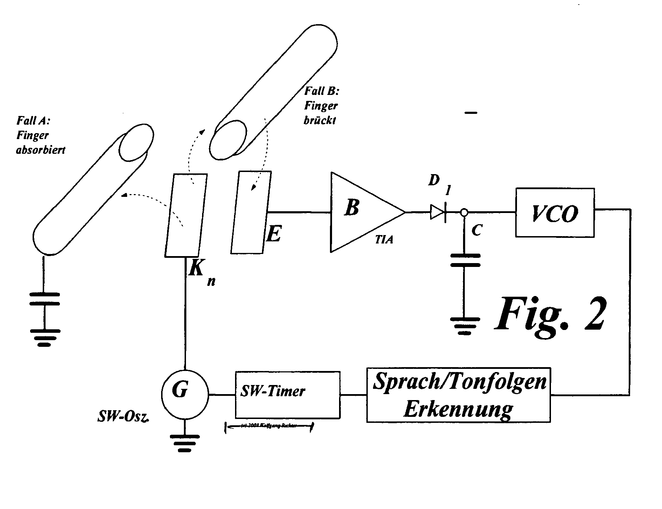

Figur 2 zeigt die einfache Ausführung des Detektors mit Transistoren. Es ist auch möglich, diese Schaltung in den Chip zu integrieren und lediglich z.B. den Ladekondensator extern anzubringen, falls dies erforderlich ist. Ein VCO kann auch als Softwarefunktion im Chip realisiert werden.

Die vorliegende Erfindung kann äußerst kostengünstig realisiert werden und eignet sich insbesondere für die Integration in Spielzeuge, um diese mit Sprache und Gesten zu steuern und um den Spielreiz anhaltend zu verstärken. Vom Nutzer lassen sich immer neue Sprachkommandos und/oder Gesten trainieren.

Die Erfindung eignet sich jedoch auch für technische Zwecke sowie für den Bereich der Daten- und Textverarbeitung sowie für Kommunikationsgeräte. Beispielsweise kann bei einem Haushaltsgerät, z.B. einem Trockner, eine derartige Anordnung innerhalb der Trommel angebracht werden. Beim Einbringen von Wäsche entstehen andere Signalfolgen, als wenn z.B. ein Kind in die Trommel klettert und sich darin bewegt (oder ein Tier). Zusätzlich wird durch die Erfindung auch auf Geräusche geachtet. Somit ist es möglich, Lebewesen in Haushaltsgeräten zu erkennen, bevor diese durch den Betrieb zu Schaden kommen. Mit Hilfe dieser Schaltung ist es auch möglich (bei zeitweiligem Betrieb), diese aus einem Schlafzustand zu wecken und/oder nur durch ein bestimmtes Sprachkommando oder eine bestimmbare Geste zu aktivieren (Wake-up Schaltung).

Die beschriebene Elektrodenanordnung lässt sich auch in Möbel integrieren, um z.B. Sitzhaltungen oder Gesten in Verbindung mit diesen Möbeln zu analysieren oder auf sprachliche Kommandos zu reagieren, z.B. verstellbare Massageliegen usw. Navigationsgeräte können mit Hilfe der Erfindung einfacher bedienbar gemacht werden. Das Einbringen und Steuern per Gesten erlaubt auch Zoomfunktionen, die per Touchscreen gerade während einer Fahrt nur schwer realisierbar sind. Wenn mehrere Personen ein derartiges System bedienen wollen, ist es möglich, Bedienerabhängige Kommandos vorzusehen oder zu analysieren, aus welcher Richtung eingebrachte Gesten erfolgen.

Die Erfindung ist überall dort vorteilhaft einsetzbar, wo aufgrund eines hohen Kostendrucks keine aufwendigeren Einzelschaltungen verwendet werden können.

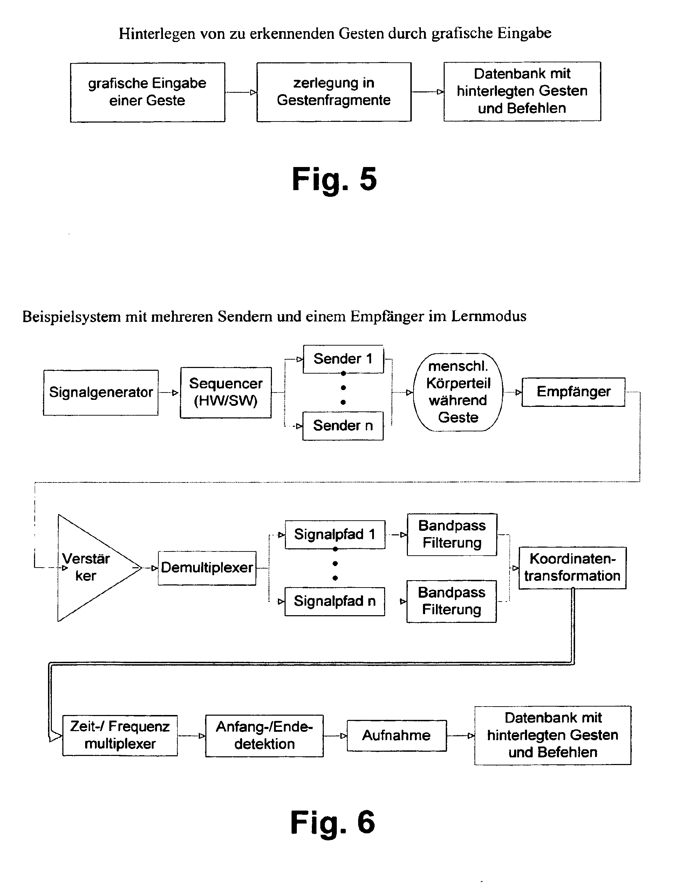

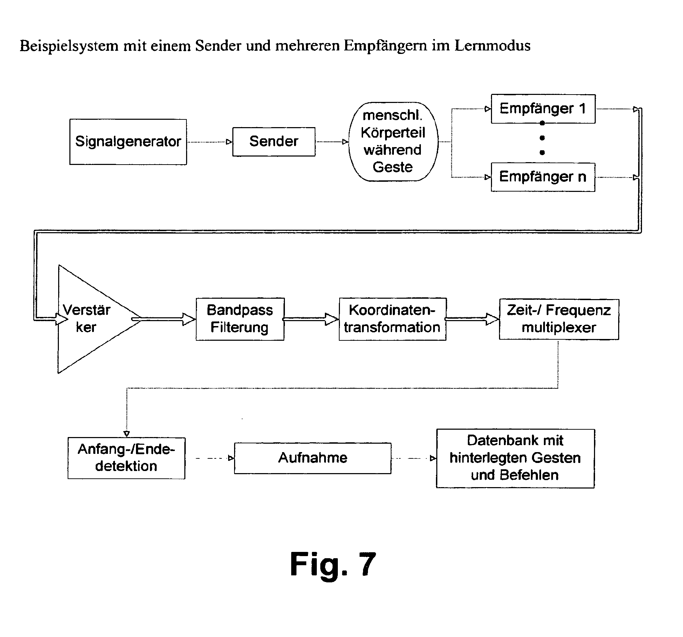

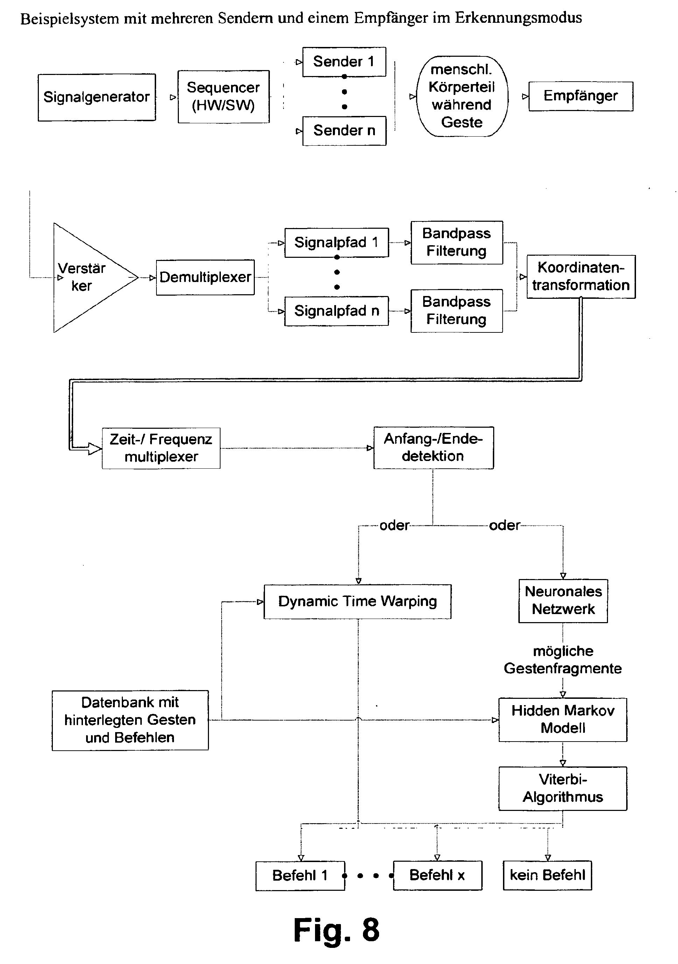

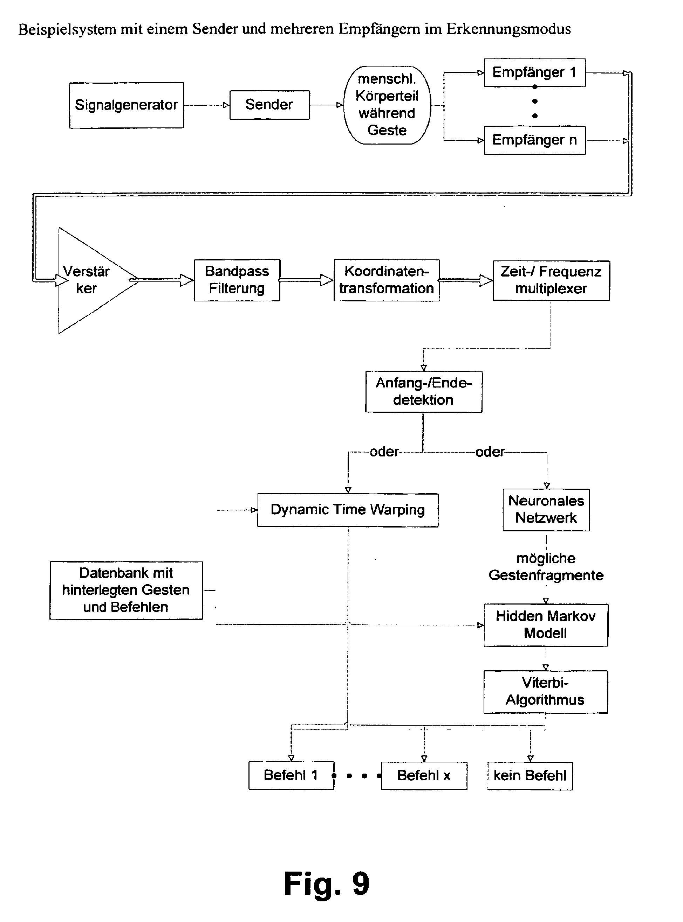

Die Blockdiagramme nach den Figuren 5 bis 9 sind aus sich selbst heraus verständlich. Figur 5 zeigt hierbei ein Blockdiagramm zur Veranschaulichung der Hinterlegung von zu erkennenden Gesten durch grafische Eingaben. Figur 6 zeigt ein Blockdiagramm zur Veranschaulichung eines Beispielsystems mit mehreren Sendern und einem Empfänger im Lernmodus. Figur 7 zeigt ein Blockdiagramm zur Veranschaulichung eines Beispielsystems mit mehreren Empfängern und einem Sender im Lernmodus. Figur 8 zeigt ein Blockdiagramm zur Veranschaulichung eines weiteren Beispielsystems mit mehreren Sendern und einem Empfänger im Erkennungsmodus. Figur 9 zeigt ein Blockdiagramm zur Veranschaulichung eines weiteren Beispielsystems mit einem Sender und mehreren Empfängern im Erkennungsmodus.

Alternativ zu der vorangehend beschriebenen Detektionstechnik mit mehreren Sendern und einem Empfänger, bzw. mehreren Empfängern und einem Sender, ist es auch möglich die einzelnen Elektroden wechselweise als Sender und Empfänger zu betreiben und den Überbrückungsgrad zwischen den jeweils als Sender oder Empfänger fungierenden Elektroden, bzw. die Änderung des Überbrückungsgrades, in Form eines entsprechend modulierten klangartigen Signales auszugeben.

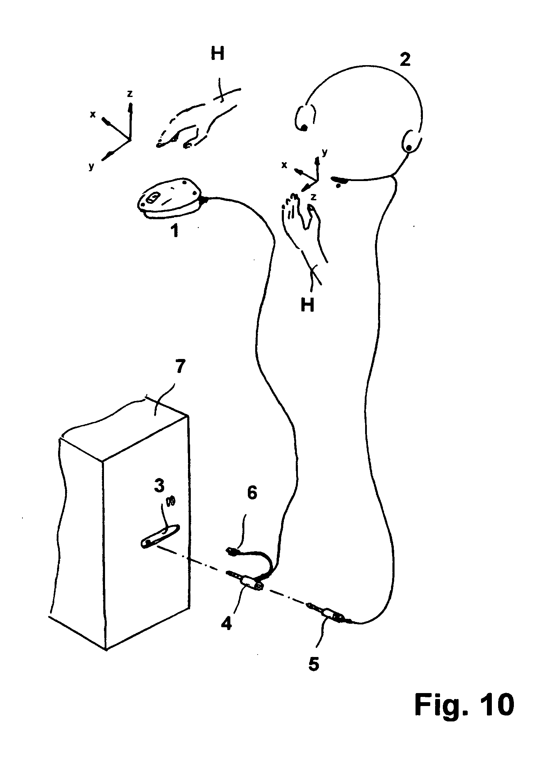

In Figur 10 ist ein EDV-System veranschaulicht, das eine mit einem Gestensensor ausgestattete Computermaus 1 sowie ein ebenfalls mit einem Gestensensor ausgestattetes Headset 2 umfasst. Sowohl die seitens der Computermaus 1, als auch die seitens des Headsets 2 generierten und hinsichtlich der Bewegung einer Hand H in die drei Raumrichtungen x, y, z indikativen Signale werden in klangartige Signale konvertiert und direkt auf den Eingang einer Soundkarte 3 eines PCs gegeben. Der Mausstecker 4 ist hierbei als Zwischenstecker ausgeführt, so dass auf diesen auch noch der Headsetstecker 5 aufgesteckt werden kann. An dem Mausstecker 4 ist weiterhin auch ein USB-Stecker 6 angebunden über welchen die Mausbewegungen in an sich bekannter Weise dem PC-System 7 zugeführt werden können.

Die Kommunikation mit dem PC-System 7 kann alternativ zu der hier zum einfacheren Verständnis gezeigten Verkabelung auch drahtlos erfolgen. Die erfindungsgemäßen Gestenerfassungseinrichtungen können auch in anderweitige Peripheriesysteme des PCs - oder z.B. im Falle eines Notebooks unmittelbar in diesen z.B. in den Bildschirm oder das Touchpad-eingebunden sein.

Das System kann so abgestimmt sein, dass dieses feststellt, durch welche Gesteneingabeeinrichtung eine Eingabe der Gesten erfolgt ist. Der jeweiligen Gesteneingabeeinrichtung können bestimmte Funktionen zugeordnet sein. Z.B. kann über die Maus-Gestensensoreinrichtung überwiegend die Navigation innerhalb eines Dokumentes oder innerhalb von Dateien abgewickelt werden. Über die Headset Gestensensoreinrichtung können insbesondere die Schriftformatierung sowie Satzzeichen und Korrekturmaßnahmen koordiniert werden. Beide Gestensensoreinrichtungen können ggf. gleichzeitig bedient werden. Die Maus Gestensenoreinrichtung kann beispielsweise mit der feinmotorisch geübteren (überwiegend der rechten Hand) angesteuert werden. Mit der verbleibenden freien Hand kann die zweite Gestensensoreinrichtung, z.B. die Headset Gestensensoreinrichtung angesteuert werden. Bestimmte Gesten, z.B Einfachstgesten in Form einer geradlinigen Abstandsänderung gegenüber der Maus Gestensensoreinrichtung, können als Dauertonsignal übertragen werden; komplexere Gesten mit ausgeprägten Bahnverlaufs- und Dynamikmerkmalen können mit einem bestimmten Delay als "Einzelwort" übertragen werden, wenn ein Gestenabschlussmerkmal erkannt wird. Die Erkennung des Gestenabschlussmerkmals kann ggf. noch durch Zusatzfunktionen der dem Spracherkennungssystem erfindungsgemäß vorgeschalteten Konvertereinrichtung bewerkstelligt werden. Das Gestenabschlussmerkmal kann beispielsweise darin bestehen, dass innerhalb einer Zeitspanne von 10% einer zurückliegenden, durch die Eingabegeste verursachten Phase mit ausgeprägter Dynamik keine besondere Signaldynamik auftritt.

Durch das erfindungsgemäße Konzept wird es möglich, Gestensignale in synergetischer Weise mit Sprachsignalen zu verarbeiten. Bei Anwendungen, bei welchen keine Spracheingabe erforderlich ist, kann das Spracherkennungstool ausschließlich zur Gesteninterpretation herangezogen werden.

Auf Grundlage des erfindungsgemäßen Konzepts kann durch Chipsätze oder ASICS die an sich für Spracherkennungsaufgaben entwickelt wurden auf besonders effiziente Weise ein Gestenerkennungssystem realisiert werden.

Die vorliegende Erfindung kann insbesondere in Kombination mit den Techniken verwendet werden, die aus den eingangs genannten, auf die Anmelderin zurückgehenden Patentanmeldungen hervorgehen.

## Patentansprüche

1. Verfahren zur Abwicklung einer elektronischen Signalverarbeitung von Eingangssignalen die als solche durch Hand-Gesten generiert werden, wobei:
a) jene Hand-Gesten seitens eines Anwenders gegenüber einem Detektionssystem (E; Tx-, Rx-Electrodes) vollführt werden,
b) die Eingangssignale derart generiert werden, dass diese Signale darstellen die mit der räumlichen Bewegung einer Hand oder deren Fingern korrelieren,
c) die Signale hierbei derart umgewandelt werden, dass das Frequenzband der resultierenden Signale im Frequenzband der einem Spracherkennungssystem zugänglichen Klangsignale enthalten ist,
**dadurch gekennzeichnet, dass**:
d) eine Interpretation der Hand-Gesten über das Spracherkennungssystem auf Grundlage jener resultierenden Signale unter Anwendung von Sprachanalyseprozeduren erfolgt.

2. Verfahren nach Anspruch 1, wobei die Eingangssignale durch eine Thereminschaltung generiert werden.

3. Verfahren nach Anspruch 1 oder 2, wobei das Detektionssystem aufweist:
drei Sendeelektroden (Eₐ₁, Eₐ₂, Eₐ₃) welche jeweils ein elektrisches Wechselfeld erzeugen, welche durch die Hand-Gesten beeinflusst werden können und von einer Empfangselektrode (Eᵢₙ) detektiert werden, wobei die Empfangselektrode (Eᵢₙ) mit einem spannungsgesteuerten Oszillator (VCO) gekoppelt ist welcher ein Eingangssignal des Spracherkennungssystems generiert.

4. Verfahren nach Anspruch 3, wobei das von der Empfangselektrode (Eᵢₙ) empfangene Signal gleichgerichtet wird und das gleichgerichtete Signal den spannungsgesteuerten Oszillator (VCO) steuert.

5. Verfahren nach Anspruch 3 oder 4, wobei die drei Sendeelektroden (Eₐ₁, Eₐ₂, Eₐ₃) sequentiell mit Wechselstromsignalpulsen beaufschlagt werden.

6. Verfahren nach Anspruch 5, wobei die Wechselstromsignalpulse eine Frequenz von 100kHz und eine Dauer von 20ms haben.

7. Verfahren nach einem der Ansprüche 1 bis 6, wobei bei einer Entfernung von einem Detektionspunkt die Tonhöhe des Signals für diesen Bezugspunkt zunimmt.

8. Verfahren nach einem der Ansprüche 1 bis 6, wobei bei einer Annäherung zu einem Detektionspunkt die Tonhöhe des Signals für diesen Bezugspunkt abnimmt.

9. Verfahren nach einem der Ansprüche 1 bis 8, wobei die Signale derart gebildet werden, dass diese die Änderung des Abstands der Gestenhand gegenüber einem wenigstens drei Bezugspunkte enthaltenden Bezugssystem beschreiben.

10. Verfahren nach einem der Ansprüche 1 bis 9, wobei ein Gestenanfang und ein Gestenende einer Geste durch Über- bzw. Unterschreitung eines vorbestimmten Signalpegels wenigstens eines E-Feld Sensors des Detektionssystems (E; Tx-, Rx-Electrodes) erkannt werden.

11. Verfahren nach einem der Ansprüche 1 bis 10, wobei ein Gestenanfang und ein Gestenende einer Geste durch eine Mindestveränderungsgeschwindigkeit von E-Feldsensorsignalen erkannt werden.

12. System zur Abwicklung einer elektronischen Signalverarbeitung von Eingangssignalen die als solche durch Hand-Gesten generiert werden, aufweisend:
eine Gestendetektionsvorrichtung (E; Tx-, Rx-Electrodes) zur Erzeugung von wenigstens einem Eingangssignal welches mit der räumlichen Bewegung einer Hand oder deren Fingern korreliert;
eine Umwandlungsvorrichtung (VCO) zum Umwandeln des wenigstens einen Eingangssignals in resultierende Signale, wobei das Frequenzband der resultierenden Signale im Frequenzband der einem Spracherkennungssystem zugänglichen Klangsignale enthalten ist,
**gekennzeichnet durch**:
ein Spracherkennungssystem welchem die resultierenden Signale zugeführt werden zur Interpretation der Hand-Gesten unter Anwendung von Sprachanalyseprozeduren.

13. System nach Anspruch 12, wobei das Detektionssystem (E; Tx-, Rx-Electrodes) drei Sendeelektroden (Eₐ₁, Eₐ₂, Eₐ₃) zur Erzeugung von elektrischen Wechselfeldern, welche durch die Hand-Gesten beeinflusst werden können, und eine Empfangselektrode (Eᵢₙ) aufweist, wobei die Empfangselektrode mit einem spannungsgesteuerten Oszillator (VCO) gekoppelt ist welcher ein Eingangssignal des Spracherkennungssystems generiert.

14. System nach Anspruch 13, mit einem zwischen Empfangselektrode und spannungsgesteuerten Oszillator (VCO) angeordnetem Gleichrichter (AC/DC).

15. System nach einem der vorhergehenden Ansprüche 12-14, wobei das System konfiguriert ist das Verfahren nach einem der Ansprüche 1-11 auszuführen.

## Claims

1. A method for carrying out electronic signal processing of input signals which as such are generated by hand gestures, wherein:
a) these hand gestures are performed by a user opposite to a detection system (E; Tx-, Rx-electrodes),
b) the input signals are generated such that they constitute signals, which correlate with the spatial movement of a hand or the fingers thereof,
c) in this connection the signals are converted such that the frequency band of the resulting signals is included in the frequency band of sound signals accessible by a speech recognition system,
**characterized in that**:
d) an interpretation of the hand gestures by means of the speech recognition system is carried out on the basis of these resulting signals based on speech analysis procedures.

2. The method of claim 1, wherein the input signals are generated by means of a theremin circuit.

3. The method of claim 1 or 2, wherein the detection system comprises:
three transmitting electrodes (Eₐ₁, Eₐ₂, Eₐ₃), each of which generate an electric alternating field, which may be affected by the hand gestures and may be detected by a receiving electrode (Eᵢₙ), wherein the receiving electrode (Eᵢₙ) is coupled with a voltage controlled oscillator (VCO), which generates an input signal of the speech recognition system.

4. The method of claim 3, wherein the signal received by the receiving electrode (Eᵢₙ) is rectified and the rectified signal controls the voltage controlled oscillator (VCO).

5. The method of claim 3 or 4, wherein alternating current signal pulses sequentially are supplied to the three transmitting electrodes (Eₐ₁, Eₐ₂, Eₐ₃).

6. The method of claim 5, wherein the alternating current signal pulses have a frequency of 100 kHz and a duration of 20 ms.

7. The method of one of claims 1 to 6, wherein during a displacement from a detection point the pitch of the signal increases for that reference point.

8. The method of one of claims 1 to 6, wherein during an approach to a detection point the pitch of the signal decreases for that reference point.

9. The method of one of claims 1 to 8, wherein the signals are generated such that they specify the variation of the distance of the gesture hand with respect to a reference system comprising at least three reference points.

10. The method of one of claims 1 to 9, wherein a gesture start and a gesture end of a gesture are detected by means of at least one electric field sensor of the detection system (E; Tx-, Rx-electrodes) exceeding and falling below a predetermined signal level, respectively.

11. The method of one of claims 1 to 10, wherein a gesture start and a gesture end of a gesture is detected by means of a minimum variation speed of electric field sensor signals.

12. A system for carrying out electronic signal processing of input signals which as such are generated by hand gestures, comprising:
a gesture detection device (E; Tx-, Rx-Electrodes) for generating at least one input signal, which correlates with the spatial movement of a hand or the fingers thereof;
a transformation device (VCO) for converting the at least one input signal into resulting signals, wherein the frequency band of the resulting signals is included in the frequency band of sound signals accessible by a speech recognition system,
**characterized in that**:
a speech recognition system to which the resulting signals are fed for interpreting the hand gestures based on speech analysis procedures.

13. The system of claim 12, wherein the detection system (E; Tx-, Rx-electrodes) has three transmitting electrodes (Eₐ₁, Eₐ₂, Eₐ₃) for generating electric alternating fields, which may be affected by the hand gestures, and a receiving electrode (Eᵢₙ), wherein the receiving electrode is coupled with a voltage controlled oscillator (VCO) that generates an input signal of the speech recognition system.

14. The system of claim 13, comprising a rectifier (AC/DC) arranged between receiving electrode and voltage controlled oscillator (VCO).

15. The system of one of the preceding claims 12 to 14, wherein the system is configured to carry out the method of one of claims 1 to 11.

## Revendications

1. Procédé pour le déroulement d'un traitement de signaux d'entrée qui sont générés en tant que tels par des gestes de la main :
a) ces gestes de la main étant effectués par un utilisateur en face d'un système de détection (E ; Tx-, Rx-Electrodes),
b) les signaux d'entrée étant générés de façon à ce que ceux-ci représentent des signaux corrélés avec le mouvement dans l'espace d'une main ou des doigts,
c) les signaux étant alors convertis de façon à ce que la bande de fréquence des signaux résultants soit contenue dans la bande de fréquence des signaux sonores accessibles à un système de reconnaissance vocale,
**caractérisé en ce que** :
d) une interprétation des gestes de la main est effectuée par l'intermédiaire du système de reconnaissance vocale sur la base de ces signaux résultants à l'aide de procédures d'analyse vocale.

2. Procédé selon la revendication 1, les signaux d'entrée étant générés par un circuit de type theremin.

3. Procédé selon les revendications 1 ou 2, le système de détection comprenant :
trois électrodes émettrices (Eₐ₁, Eₐ₂, Eₐ₃) qui génèrent chacun un champ électrique alternatif, qui peut être influencé par les gestes de la main et qui est détecté par une électrode réceptrice (Eᵢₙ), l'électrode réceptrice (Eᵢₙ) étant couplée à un oscillateur (VCO) contrôlé par tension qui génère un signal d'entrée du système de reconnaissance vocale.

4. Procédé selon la revendication 3, le signal reçu par l'électrode réceptrice (Eᵢₙ) est redressé et le signal redressé contrôle l'oscillateur (VCO) contrôlé par tension.

5. Procédé selon les revendications 3 ou 4, les trois électrodes émettrices (Eₐ₁, Eₐ₂, Eₐ₃) étant alimentées séquentiellement avec des impulsions de signaux de courant alternatif.

6. Procédé selon la revendication 5, les impulsions de signaux de courant alternatif ayant une fréquence de 100 kHz et une durée de 20 ms.

7. Procédé selon l'une des revendications 1 à 6, la hauteur de son du signal augmentant, lors d'un éloignement d'un point de détection, pour ce point de référence.

8. Procédé selon l'une des revendications 1 à 6, la hauteur de son du signal diminuant, lors d'un rapprochement d'un point de détection, pour ce point de référence.

9. Procédé selon l'une des revendications 1 à 8, les signaux étant formés de façon à ce que ceux-ci décrivent la modification de la distance entre la main effectuant le geste et un système de référence contenant au moins trois points de référence.

10. Procédé selon l'une des revendications 1 à 9, un début de geste et une fin de geste étant détectés grâce au dépassement ou au passage en dessous d'un niveau de signal prédéterminé d'au moins un capteur de champ électrique du système de détection (E ; Tx-, Rx-Electrodes).

11. Procédé selon l'une des revendications 1 à 10, un début de geste et une fin de geste étant détectés par une vitesse de modification minimale de signaux de capteurs de champ électrique.

12. Système pour le déroulement d'un traitement de signal électronique de signaux d'entrée qui sont générés en tant que tels par des gestes de la main, comprenant :
un dispositif de détection de gestes (E ; Tx, Rx-Electrodes) pour la production d'au moins un signal d'entrée qui est corrélé avec le mouvement dans l'espace d'une main ou de ses doigts ;
un dispositif de conversion (VCO) permettant de convertir l'au moins un signal d'entrée en signaux résultants, la bande de fréquence des signaux résultants étant contenue dans la bande de fréquence des signaux sonores accessibles à un système de reconnaissance vocale,
**caractérisé par** :
un système de reconnaissance vocale dans lequel sont introduits les signaux résultants pour l'interprétation des gestes de la main à l'aide de procédures d'analyse vocale.

13. Système selon la revendication 12, le système de détection (E ; Tx, Rx-Electrodes) comprenant trois électrodes émettrices (Eₐ₁, Eₐ₂, Eₐ₃) pour la production de champs électriques alternatifs, qui peuvent être influencés par des gestes de la main, et un électrode réceptrice (Eᵢₙ), l'électrode réceptrice étant couplée à un oscillateur (VCO) contrôlé par tension qui génère un signal d'entrée du système de reconnaissance vocale.

14. Système selon la revendication 13, avec un redresseur (AC/DC) disposé entre l'électrode réceptrice et l'oscillateur contrôlé par tension (VCO).

15. Procédé selon l'une des revendications 12 à 14, le système étant configuré pour réaliser le procédé selon l'une des revendication 1 à 11.
